# EUROPEAN PATENT APPLICATION

(11) **EP 4 799 473 A1**
(43) Date of publication of application: **02.09.2026**
(21) Application number: 24882450.0
(22) Date of filing: 24.10.2024
(51) Int. Cl.: A01G 7/00, A01C 1/00, A01C 1/02, A01G 31/00

(54) **GERMINATED PLANT SEED PRODUCTION METHOD AND GERMINATION TREATMENT DEVICE**

(30) Priority: 24.10.2023 JP 2023182675
(71) Applicant: SprouTx Inc., Kumamoto 861-2204 (JP)
(72) Inventor: OCHIAI, Koji, Tokyo 102-0083 (JP)
(74) Representative: RGTH
(86) International application number: PCT/JP2024/037910
(87) International publication number: WO 2025/089340

(57) **Abstract**

Provided are a germinated plant seed production method and a germination treatment device that make it possible to adjust the ratio of amino acids. The present invention employs a germinated plant seed production method including a germination step for inducing germination of plant seeds while intermittently supplying water to germinate the plant seeds, wherein the temperature of water is set for each water supply cycle in at least some water supply cycles. The present invention also employs a germination treatment device having a means for inducing germination of plant seeds while intermittently supplying water to germinate the plant seeds, wherein the means can set the temperature of water for each water supply cycle in at least some water supply cycles.

## Description

### TECHNICAL FIELD

The present invention relates to a method for manufacturing germinated plant seeds and a germination treatment device.

### BACKGROUND ART

In recent years, attention has been focused on germinated plant seeds in which plant seeds are germinated because the germinated plant seeds are a food ingredient with high nutritional value and promising useful effects. For example, Patent Document 1 discloses a method for manufacturing germinated differentiated plant seeds in which amounts of water-soluble polyphenols and antioxidants are increased.

### Citation List

### Patent Documents

Patent Document 1: Japanese Patent No. 5722518

### DISCLOSURE OF THE INVENTION

### Problems to be Solved by the Invention

However, a technique for focusing on the composition of amino acids of germinating plant seeds and adjusting the ratios thereof has not been so far extensively studied.

The present invention is made in view of the problem described above, and an object of the present invention is to provide a method for manufacturing germinated plant seeds that makes it possible to adjust the ratios of amino acids and a germination treatment device.

### Means for Solving the Problems

In order to solve the problem described above, the present inventors have thoroughly studied to find that in germination of intermittently supplying water, the temperature of the water is set for each of water supply cycles, and thus it is possible to solve the problem described above, with the result that the present invention has been completed. Specifically, the present invention provides the followings.
[1] A method for manufacturing germinated plant seeds, the method comprising: inducing germination of plant seeds while intermittently supplying water to germinate the plant seeds, where in at least a part of water supply cycles, a temperature of the water is set for each of the at least a part of water supply cycles.
[2] The method for manufacturing described in [1], where in the at least a part of water supply cycles, an interval between water supplies is equal to or less than two hours.
[3] The method for manufacturing described in [1] or [2], where in each of the at least a part of water supply cycles, a temperature fluctuation range of the plant seeds is equal to or less than 5°C.
[4] The method for manufacturing described in any one of [1] to [3], where two or more temperatures of the water are set.
[5] A germination treatment device including: a means for inducing germination of plant seeds while intermittently supplying water to germinate the plant seeds, where in at least a part of water supply cycles, the means is capable of setting a temperature of the water for each of the at least a part of water supply cycles.
[6] The germination treatment device described in [5], where in the at least a part of water supply cycles, the means is capable of setting an interval between water supplies such that the interval is equal to or less than two hours.
[7] The germination treatment device described in [5] or [6], where in each of the at least a part of water supply cycles, the means is capable of setting a temperature fluctuation range of the plant seeds such that the temperature fluctuation range is equal to or less than 5°C.
[8] The germination treatment device described in any one of [5] to [7], where the means is capable of setting two or more temperatures of the water.

### Effects of the Invention

According to the present invention, it is possible to provide a method for manufacturing germinated plant seeds that makes it possible to adjust the ratios of amino acids and a germination treatment device.

### BRIEF DESCRIPTION OF THE DRAWINGS

FIG. 1 a diagram showing the compositions of amino acids in Test Examples 1-1 to 1-4;
FIG. 2 a diagram showing the compositions of amino acids in Test Examples 2-1 to 2-4;
FIG. 3 a diagram showing the compositions of amino acids in Test Examples 3-1 to 3-4;
FIG. 4 is an illustrative view illustrating a state where seeds are placed in a germination container;
FIG. 5 is a diagram showing a change in the weight of seeds in Test Example 1-5; and
FIG. 6 is a diagram showing a change in the weight of seeds in Test Example 1-6.

### PREFERRED MODE FOR CARRYING OUT THE INVENTION

Although an embodiment of the present invention will be described below, the embodiment is not intended to limit the present invention.

In a method for manufacturing germinated plant seeds, water may be supplied, for example, to prevent the plant seeds from drying out and to maintain the temperature, and for example, Patent Document 1 discloses watering of the seeds at regular intervals. The present inventors have found that as shown in Examples which will be described later, by changing the temperature of water to be supplied, the ratios of amino acids in germinated plant seeds are significantly changed. Specifically, it has been found that at relatively high temperatures, the ratios of acidic amino acids such as aspartic acid and glutamic acid are increased whereas at relatively low temperatures, the ratios of basic amino acids such as arginine and lysine are increased. It has been found from these findings that the temperature of the water is set for each water supply cycle, and thus it is possible to adjust the ratios of amino acids. The technical idea of setting the temperature of the water for each watering cycle is not disclosed in Patent Document 1. Although the reason why the ratios of acidic amino acids are increased at relatively high temperatures is not entirely clear, it is presumed to be due to the following. It is presumed that the reason why the ratios of basic amino acids are increased at relatively low temperatures is opposite to this. The relatively high temperature water is supplied, and thus the temperature of the plant seeds is increased to increase the respiration amount thereof, with the result that the concentration of CO₂ in a germination induction container is increased. In this way, the pH inside the plant seeds is lowered, and thus enzymes in the seeds which are most optimally acidic function preferentially, with the result that the amount of acidic amino acids generated is increased.

### <Method for manufacturing germinated plant seeds>

A method for manufacturing germinated plant seeds includes inducing germination of plant seeds while intermittently supplying water to germinate the plant seeds. In the germination, in at least a part of water supply cycles, the temperature of the water is set for each of the at least a part of water supply cycles.

### (Germination)

The germination is performed while intermittently supplying the water to the plant seeds. The intermittent supply of the water is performed by repeating one cycle (water supply cycle) consisting of water supply and stop of water supply. The supply of the water serves, for example, to prevent the plant seeds from drying out in the germination and to hold the temperature and humidity in the germination.

The supply of the water can be performed, for example, by watering. In the present specification, the "watering" means spraying water to the plant seeds, pouring water over the plant seeds, intermittently immersing the plant seeds in water, misting the plant seeds or maintaining a state where the humidity is relatively high (80% or more of saturation at a temperature within the germination temperature range of the plant seeds) to prevent the plant seeds from drying out.

In the at least a part of water supply cycles, one temperature of the water is set for each of the at least a part of water supply cycles. In terms of easily adjusting the ratios of amino acids, two or more temperatures of the water are preferably set, and three or more temperatures are more preferably set. For example, when a plurality of water supply cycles are repeated, the temperature can be set to Tₐ in the first half and to T_{b} in the second half. One temperature may also be set. In order to easily obtain a well-balanced composition of amino acids, a difference between the highest temperature and the lowest temperature of the two or more set water temperatures is preferably equal to or greater than 1°C, more preferably equal to or greater than 3°C and further preferably equal to or greater than 5°C. The difference described above may be, for example, equal to or less than 15°C or equal to or less than 10°C.

The temperature of the water is not particularly limited, and can be appropriately set to, for example, a temperature in the range of germination optimal temperature conditions in order to obtain the desired ratios of amino acids. For example, when the ratios of acidic amino acids are desired to be increased, the temperature of the water can be set higher than the most optimal temperature for germination, when the ratios of neutral amino acids are desired to be increased, the temperature of the water can be set to around the most optimal temperature for germination and when the ratios of basic amino acids are desired to be increased, the temperature of the water can be set lower than the most optimal temperature for germination. The germination optimum temperature of the plant seed is different depending on the plant, and for example, the germination optimum temperature of soybean is 10 to 30°C (most optimum temperature: 27°C), the germination optimum temperature of pea is 18 to 40°C (most optimum temperature: 25°C) and the germination optimum temperature of mung bean is 20 to 35°C (most optimum temperature: 28°C).

When all water supply cycles are equally divided into three parts which are a first part, a middle part and a latter part according to the number of cycles, and the average values of the water temperatures in the first part, the middle part and the latter part are assumed to be T₁, T₂ and T₃, respectively, it is preferable that T₁ ≥ (preferably >) T₂ ≥ (preferably >) T₃, or T₁ ≤ (preferably <) T₂ ≤ (preferably <) T3, and in terms of easily increasing the amount of all amino acids generated in germinated plant seeds, it is more preferable that T₁ > T₂ > T₃. When all water supply cycles cannot be evenly divided, extra cycles are allocated to the first part or to the first part and the middle part.

In the at least a part of water supply cycles, an interval between water supplies is preferably equal to or less than two hours, and more preferably equal to or less than one and a half hours. When the interval between water supplies is equal to or less than two hours, the temperature fluctuation range of the plant seeds is easily decreased, and thus the effects of the present invention are easily satisfactorily obtained. The interval between water supplies may be, for example, equal to or greater than 10 minutes, equal to or greater than 20 minutes or equal to or greater than 30 minutes. The intervals between water supplies in the water supply cycles may be the same as or different from each other.

A water supply time in each of the water supply cycles is preferably 1 to 60 minutes, and more preferably 5 to 30 minutes. When the water supply time exceeds 60 minutes, there is a tendency that it is difficult to adjust the ratios of amino acids. The water supply times in the water supply cycles may be the same as or different from each other.

In terms of hygiene, the water used for watering may contain a disinfectant to prevent the growth of bacteria and the like in the germination. Although as the disinfectant, for example, 10 ppm of sodium hypochlorite or the like is mentioned, other antimicrobial compounds may be used.

The germination is preferably performed under a high carbon dioxide concentration and/or a low oxygen concentration condition.

An oxygen concentration in the germination is not particularly limited as long as it is lower than the oxygen concentration in the atmosphere (20%), but is preferably 4% to 20% by volume, more preferably 4% to 18% by volume and further preferably 4% to 15% by volume. When the oxygen concentration in the germination is equal to or greater than 4% by volume, the oxygen respiration of the plant seeds is unlikely to be lowered. The oxygen concentration is sufficient as long as it is held in a substantially constant concentration range, and does not necessarily need to be constantly maintained in a constant concentration range. Regarding the oxygen concentration in the germination, the "substantially" means that the oxygen concentration is maintained at a predetermined concentration as described above in 60% or more of the total time of the germination, preferably in 80% or more and more preferably in 90% or more. Although the time during which the oxygen concentration is held at the predetermined concentration may be continuous, the oxygen concentration is preferably held at the predetermined concentration intermittently.

The oxygen concentration can be controlled using an incubator, a desiccator, a cultivation chamber or the like which can adjust the oxygen concentration. However, since in a sealed or poorly ventilated device, oxygen is consumed by the respiration of the plant seeds, it is possible to lower and adjust the oxygen concentration, for example, by stacking the plant seeds in several layers in a sealable container. The oxygen in the container is consumed by the plant seeds which have started germination differentiation, and thus the oxygen concentration is lowered. In order to prevent the oxygen concentration range from falling below an effective concentration range, it is possible to maintain the oxygen concentration at an appropriate concentration by periodical replacement with the normal atmosphere. The replacement with the normal atmosphere is performed by replacing the gas between the stacked plant seeds by the supply of the water described above.

A carbon dioxide concentration in the germination is not particularly limited as long as the carbon dioxide concentration is higher than the carbon dioxide concentration in the atmosphere, and does not impair the effects of the present invention, but is preferably 0.2% (2,000 ppm) to 10% (100,000 ppm) by volume, more preferably 0.4% (4,000 ppm) to 5% (50,000 ppm) by volume and most preferably 1.2% (12,000 ppm) to 2% (20,000 ppm) by volume. When the carbon dioxide concentration in the germination is equal to or greater than 0.2% by volume, the effect of suppressing respiration is easily obtained. When the carbon dioxide concentration in the germination is equal to or less than 10% by volume, the germination is unlikely to be impaired. The carbon dioxide concentration is sufficient as long as it is held in a substantially constant concentration range, and does not necessarily need to be constantly maintained in a constant concentration range. Regarding the carbon dioxide concentration in the germination, the "substantially" means that the carbon dioxide concentration is maintained at a predetermined concentration as described above in 60% or more of the total time of the germination, preferably in 80% or more and more preferably in 90% or more. Although the time during which the carbon dioxide concentration is held at the predetermined concentration may be continuous, the carbon dioxide concentration is preferably held at the predetermined concentration intermittently.

The carbon dioxide concentration can be controlled using an incubator, a desiccator, a cultivation chamber or the like which can adjust the carbon dioxide concentration. However, it is also possible to increase and adjust the carbon dioxide concentration without using a specific device through carbon dioxide emitted by the respiration of the plant seeds. For example, the plant seeds are stacked in several layers in a sealable container, and thus carbon dioxide concentration is discharged by the respiration of the plant seeds which have started germination differentiation, with the result that the carbon dioxide concentration is increased. In order to prevent the carbon dioxide concentration range from rising beyond an effective concentration range, it is possible to maintain the carbon dioxide concentration at an appropriate concentration by periodical air replacement. The replacement of the air can be performed by replacing the air between the stacked plant seeds by the supply of the water described above.

Although in the germination, it is desirable that either the oxygen concentration or the carbon dioxide concentration as described above is adjusted to satisfy the conditions described above, both the oxygen concentration and the carbon dioxide concentration are more preferably adjusted in order to obtain more reliable effects.

Temperature conditions in the germination are not particularly limited as long as the germination optimum temperature which allows the plant seeds to be germinated and differentiated is provided. Although the germination optimum temperature of the plant seeds is different depending on the plant seeds, the germination optimum temperature is, for example, 10°C to 50°C, and preferably 20°C to 45°C. In the germination, the plant seeds are preferably held in a constant temperature range, and more preferably held under a condition in which the temperature is repeatedly increased and decreased.

In each of the at least a part of water supply cycles, the temperature fluctuation range of the plant seeds is preferably equal to or less than 5°C, and more preferably equal to or less than 3°C. When the temperature fluctuation range is equal to or less than 5°C, the effects of the present invention are easily satisfactorily obtained.

In the germination, the germination temperature conditions can be adjusted mainly by the heat of the germination caused by the respiration of the plant seeds being germinated and differentiated and the supply of the water. The plant seeds are stacked in several layers, and thus the heat of the germination is generated by the respiration of the plant seeds which have started germination differentiation. Since the plant seeds are stacked, the heat of the germination generated is not dissipated, and thus the temperature between the stacked plant seeds is increased with time. The increased temperature described above is decreased by periodically supplying the water, and thus it is possible to adjust the germination temperature such that the germination temperature falls in a constant temperature range. When the temperature conditions are adjusted by the heat of the germination and the supply of the water as described above, the temperature is gradually increased and decreased in a repeated manner within the range of the temperature conditions in which the plant seeds can be germinated and differentiated.

Furthermore, in the germination, light may be applied. Even when no light is applied at all, a fluorescent tube which is normally used in plant cultivation can be used for application of light. Light of different wavelengths such as a three-wavelength type, a four-wavelength type, UV, infrared light and the like may be used alone or in combination. Although the time during which light is applied is not particularly limited, the time is preferably equal to or greater than two hours, more preferably equal to or greater than four hours and most preferably equal to or greater than six hours, and light may be applied for up to 24 hours. The light intensity is preferably 20 µmol / m² · second to 100 µmol / m² · second.

In the present specification, the "germinated plant seeds" mean plant seeds which have transitioned from a dormant state to a state capable of germination. Hence, as long as a germination reaction has been facilitated, plant seeds which do not appear to have germinated are also included in the "germinated plant seeds" of the present invention, and plant seeds which have germinated to have grown sprouts are also included therein.

Although the time during which the germination as described above is performed is not particularly limited, the time is generally about 10 to 30 hours.

### (Plant seeds)

The plant seeds are not particularly limited, and examples thereof include: Vitaceae such as grape; Asteraceae such as sunflower, safflower and burdock; Fabaceae such as soybean, pea, mung bean, clover, peanut and fenugreek; Cruciferae (Brassica family) such as Brassica; Pedaliaceae such as sesame; Lamiaceae such as perilla, linseed, shiso, rosemary, thyme, sage and mint; Polygonaceae such as buckwheat; Poaceae such as rice, corn, wheat, wild rice, barley, foxtail millet and barnyard millet; Rosaceae such as American red cherry, apricot, almond, plum, strawberry and loquat; Rutaceae such as grapefruit and orange; Hypericaceae such as St. John's wort and mangosteen; Solanaceae such as tomato and pepper; Apiaceae such as carrot; Anacardiaceae such as mango; Pomegranate family such as pomegranate; Polygonaceae such as knotweed; Sterculiaceae such as cacao; Trifoliaceae; Ginkgoaceae; Moraceae; Theaceae; Oleaceae; and Holly family. Among them, in terms of easily satisfactorily obtaining the effects of the present invention, seeds of Fabaceae are preferable, and soybean, pea and mung bean are more preferable.

The plant seeds used in the germination are preferably in a state capable of germination. The plant seeds capable of germination are plant seeds which are not in a "dormant state". For example, the plant seeds with a moisture content of 9 to 12% are considered to be in a dormant state. Specifically, the plant seeds can be brought from a dormant state into a state capable of germination by heating and/or hydrating the plant seeds. However, it is also possible to increase the moisture content of the plant seeds by supplying the water in the germination without particularly performing any special pretreatment, and thereby to bring the plant seeds into a state capable of germination.

A combination of heating and hydration is particularly effective. Although the plant seeds can be brought into a state capable of germination by only hydration without heating them, the plant seeds are heated and hydrated simultaneously, and thus a germination rate is increased. When the plant seeds are heated and hydrated simultaneously, for example, the plant seeds can be immersed in heated water for a certain period of time. The plant seeds are brought into a state capable of germination by watering the plant seeds with water within a germination temperature range without performing any special pretreatment. The plant seeds are brought into a state capable of germination by heating the plant seeds within the germination temperature range. The plant seeds are preferably heated at a temperature 5°C to 30°C higher than the median value of each germination optimum temperature. A heating temperature for heating the plant seeds is preferably in a temperature range higher than the germination optimum temperature of the plant seeds. Although the germination optimum temperature of the plant seeds is different depending on the plant, the germination optimum temperature is, for example, 10°C to 50°C, and preferably 20°C to 45°C. For example, the germination optimum temperature of grape seeds is 20°C to 35°C, the germination optimum temperature of mung bean seeds is 20°C to 35°C, the germination optimum temperature of radish seeds is 18°C to 30°C and the germination optimum temperature of soybean seeds is 10°C to 30°C. The median value of the germination optimum temperature of grape and mung bean is about 28°C, the median value of the germination optimum temperature of radish is 24°C and the median value of the germination optimum temperature of soybean is 20°C.

Hydration can be performed simultaneously with heating or can be performed independently. Furthermore, in the germination described above, the plant seeds can be hydrated by watering. This is because the heating described above causes the plant seeds to transition from a dormant state to a germinated, differentiated state, and as the germination differentiation starts, the plant seeds absorb a large amount of water.

### <Germination treatment device>

A germination treatment device includes a means for inducing the germination of the plant seeds while intermittently supplying the water to germinate the plant seeds, and in at least a part of water supply cycles, the means is capable of setting the temperature of the water for each of the at least a part of water supply cycles.

In order to realize the method described in <Method for manufacturing germinated plant seeds>, the means may be capable of setting the temperature and the interval in the supply of the water, the supply time and the like.

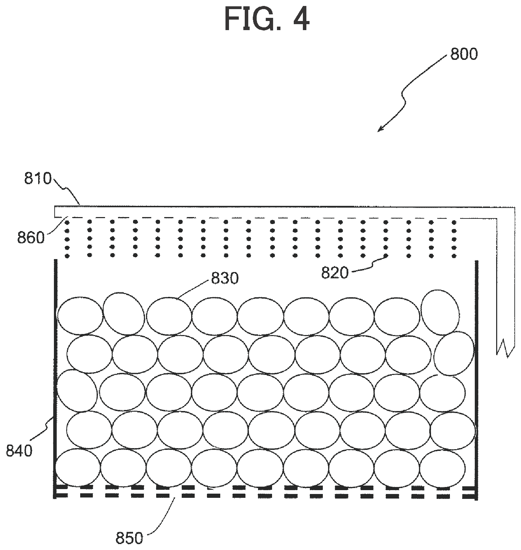

As a specific example of the germination treatment device, a germination induction container 800 as shown in FIG. 4 can be illustrated. Although the germination induction container 800 can be used with an upper surface 810 in an open state, the germination induction container 800 can also be used with the upper surface 810 sealed. In order to control the carbon dioxide concentration, the oxygen concentration and the temperature inside the container, it is preferable to use the container with the upper surface 810 and a lower surface 840 in a sealed state. The germination induction container 800 can also be used in an open state in a cultivation chamber or the like which can control the carbon dioxide concentration, the oxygen concentration and the temperature. The carbon dioxide, the oxygen and the temperature conditions in the container are close to those in the cultivation chamber.

The germination induction container 800 includes nozzles 860 for spraying water 820 onto an upper part. In a bottom surface, discharge holes (air holes) 850 are spaced about 1 cm apart, and thus it is possible to discharge excess water after watering. The discharge holes are coupled to vertical tubes (not shown) which extend from the bottom of a lower container 840. Each of the tubes is fitted into one arm of a U-shaped tube. The other arm of each of the U-shaped tubes is open to an ambient environment in a room, and when the sprayed water reaches a certain height in the U-shaped tube, the water overflows from the open arm, and the U-shaped tube acts as a siphon. After the completion of the watering performed by the siphon, the container becomes empty.

### EXAMPLES

Although the present invention will be specifically described below using Examples, the present invention is not limited to Examples.

### (Test Example 1-1: soybean seeds (normal))

100 g of soybean seeds was washed with running water, and was then immersed for 4 hours in an aqueous solution (40°C) containing 100 ppm of sodium hypochlorite serving as a disinfectant
Then, the seeds were washed with distilled water, and the water was removed using soft paper. The seeds were stacked in the germination induction container 800 to have a thickness of about 5 cm (FIG. 4). The germination induction container 800 was placed in the cultivation chamber at room temperature (28°C), a 10 ppm sodium hypochlorite solution at 27°C was sprayed for 8 minutes every four hours to induce germination for 24 hours and about 226 g of the germinated seeds was collected. The temperature fluctuation range of the seeds in each watering cycle was 23°C.
226 g of the collected germinated seeds was frozen at - 80°C, and was freeze-dried overnight. 0.25 g of the freeze-dried germinated seeds was placed in a mortar, and was crushed with a pestle. 1 mL of 70% by mass of ethanol was added to the crushed germinated seeds, and the mixture was mixed by ultrasonic treatment for 60 minutes. The mixture was centrifuged at 3000 rpm for 10 minutes, and a supernatant was collected. The supernatant was filtered through a 0.2 µm filter, and an extract was obtained.

### (Test Example 1-2: soybean seeds (acidic))

An extract was obtained in the same manner as in Test Example 1-1 except that instead of spraying the 10 ppm sodium hypochlorite solution at 27°C every four hours, the 10 ppm sodium hypochlorite solution at 30°C was sprayed every hour. The temperature fluctuation range of the seeds in each watering cycle was 5°C.

### (Test Example 1-3: soybean seeds (neutral))

An extract was obtained in the same manner as in Test Example 1-1 except that instead of spraying the 10 ppm sodium hypochlorite solution at 27°C every four hours, the 10 ppm sodium hypochlorite solution at 27°C was sprayed every hour. The temperature fluctuation range of the seeds in each watering cycle was 5°C.

### (Test Example 1-4: soybean seeds (basic))

An extract was obtained in the same manner as in Test Example 1-1 except that instead of spraying the 10 ppm sodium hypochlorite solution at 27°C every four hours, the 10 ppm sodium hypochlorite solution at 24°C was sprayed every hour. The temperature fluctuation range of the seeds in each watering cycle was 5°C.

### (Test Example 2-1: pea seeds (normal))

An extract was obtained in the same manner as in Test Example 1-1 except that pea seeds were used instead of soybean seeds, and the 10 ppm sodium hypochlorite solution at 25°C was sprayed instead of spraying the 10 ppm sodium hypochlorite solution at 27°C. The temperature fluctuation range of the seeds in each watering cycle was 24°C.

### (Test Example 2-2: pea seeds (acidic))

An extract was obtained in the same manner as in Test Example 2-1 except that instead of spraying the 10 ppm sodium hypochlorite solution at 25°C every four hours, the 10 ppm sodium hypochlorite solution at 28°C was sprayed every hour. The temperature fluctuation range of the seeds in each watering cycle was 5°C.

### (Test Example 2-3: pea seeds (neutral))

An extract was obtained in the same manner as in Test Example 2-1 except that instead of spraying the 10 ppm sodium hypochlorite solution at 25°C every four hours, the 10 ppm sodium hypochlorite solution at 25°C was sprayed every hour. The temperature fluctuation range of the seeds in each watering cycle was 5°C.

### (Test Example 2-4: pea seeds (basic))

An extract was obtained in the same manner as in Test Example 2-1 except that instead of spraying the 10 ppm sodium hypochlorite solution at 25°C every four hours, the 10 ppm sodium hypochlorite solution at 22°C was sprayed every hour. The temperature fluctuation range of the seeds in each watering cycle was 5°C.

### (Test Example 3-1: mung bean seeds)

An extract was obtained in the same manner as in Test Example 1-1 except that mung bean seeds were used instead of soybean seeds, and the 10 ppm sodium hypochlorite solution at 28°C was sprayed instead of spraying the 10 ppm sodium hypochlorite solution at 27°C. The temperature fluctuation range of the seeds in each watering cycle was 22°C.

### (Test Example 3-2: mung bean seeds (acidic))

An extract was obtained in the same manner as in Test Example 3-1 except that instead of spraying the 10 ppm sodium hypochlorite solution at 28°C every four hours, the 10 ppm sodium hypochlorite solution at 31°C was sprayed every hour. The temperature fluctuation range of the seeds in each watering cycle was 5°C.

### (Test Example 3-3: mung bean seeds (neutral))

An extract was obtained in the same manner as in Test Example 3-1 except that instead of spraying the 10 ppm sodium hypochlorite solution at 28°C every four hours, the 10 ppm sodium hypochlorite solution at 28°C was sprayed every hour. The temperature fluctuation range of the seeds in each watering cycle was 5°C.

### (Test Example 3-4: mung bean seeds (basic))

An extract was obtained in the same manner as in Test Example 3-1 except that instead of spraying the 10 ppm sodium hypochlorite solution at 28°C every four hours, the 10 ppm sodium hypochlorite solution at 25°C was sprayed every hour. The temperature fluctuation range of the seeds in each watering cycle was 5°C.

### <Method for analyzing amino acids in germinated plant seeds>

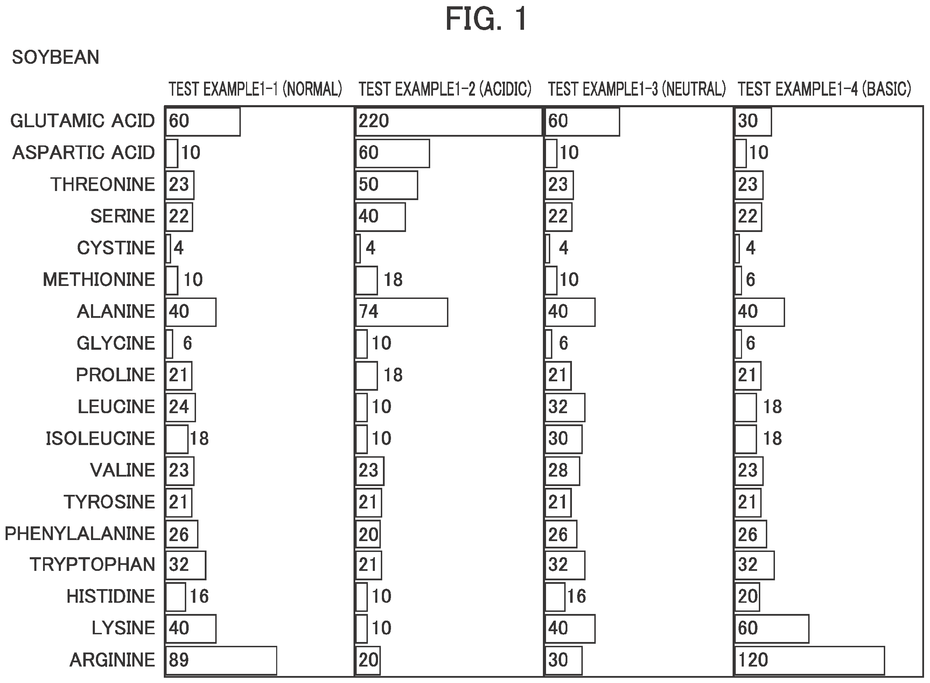

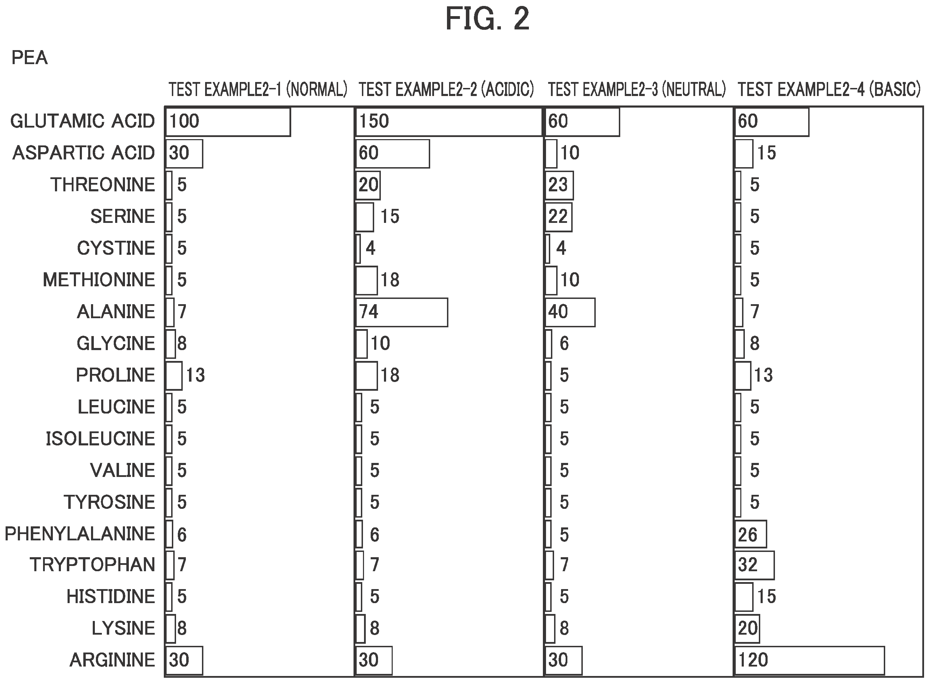

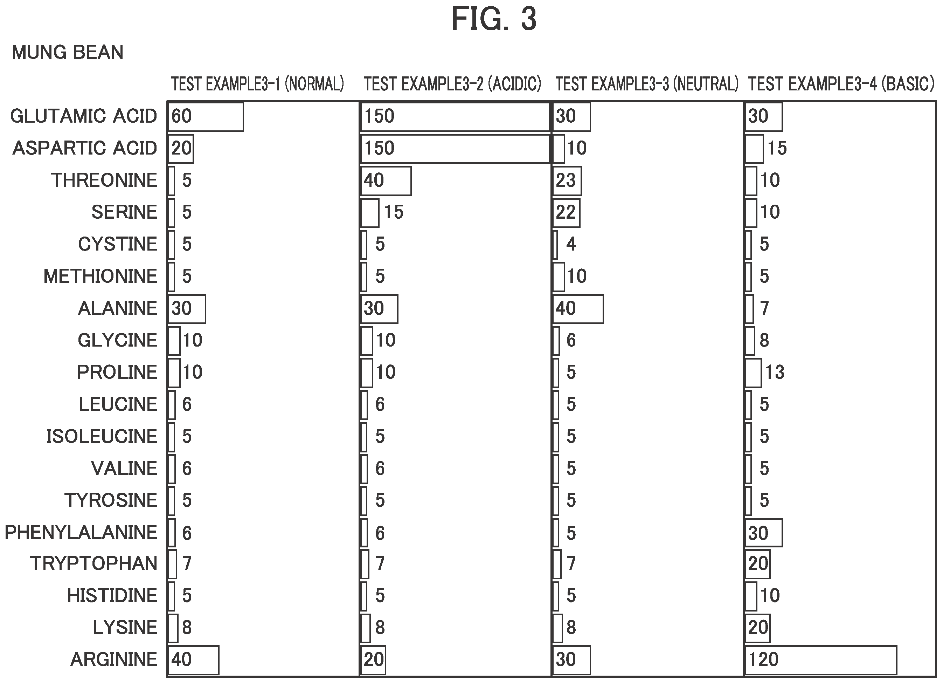

The composition of amino acids (unit: mg / g) in each of the extracts of the germinated plant seeds obtained as described above was measured under the following conditions. The results of Test Examples 1-1 to 1-4 are shown in FIG. 1, the results of Test Examples 2-1 to 2-4 are shown in FIG. 2 and the results of Test Examples 3-1 to 3-4 are shown in FIG. 3. Device used: high-performance liquid chromatograph (UHPLC) made by Shimadzu Corporation
Detector: fluorescence detector
Column: "Inertsil ODS-4 HP 3 µm" (100 mm L. × 3.0 mm I.D.) made by GL Sciences Inc.
Column temperature: 40°C
Elution buffer composition: 15 mmol / L potassium dihydrogen phosphate, 5 mmol / L dipotassium hydrogen phosphate, water / acetonitrile / methanol = 15 / 45 / 40 (V / V / V)
Flow rate: 0 to 1.5 min 9.5%, 1.5 to 6.0 min 30%, 6.0 to 11.0 min 40% and 11.0 to 22.0 min 100%

As shown in FIGS. 1 to 3, it has been found that by changing the watering temperature, the ratios of the amino acids in the germinated plant seeds were significantly changed. Specifically, it has been found that at relatively high watering temperatures, the ratios of acidic amino acids such as aspartic acid and glutamic acid were increased, at medium watering temperatures, the ratios of neutral amino acids were increased and at relatively low watering temperatures, the ratios of basic amino acids such as arginine and lysine were increased. In particular, it has been found that by setting an interval between water supplies to equal to or less than two hours, or by setting the temperature fluctuation range of the plant seeds in each water supply cycle to equal to or less than 5°C, these results were easily obtained. It has been found from these results that by setting the temperature of the water for each water supply cycle, the ratios of the amino acids were able to be adjusted. It has also been found that by combining different temperatures, the ratios of the amino acids were able to be freely adjusted.

### (Test Example 1-5: soybean seeds (high temperature → medium temperature → low temperature))

An extract was obtained in the same manner as in Test Example 1-1 except that the germination induction time was set to 15 hours instead of 24 hours, in the first five cycles, the 10 ppm sodium hypochlorite solution at 30°C was sprayed every hour, in the subsequent five cycles, the 10 ppm sodium hypochlorite solution at 27°C was sprayed every hour and in the further subsequent five cycles, the 10 ppm sodium hypochlorite solution at 24°C was sprayed every hour. The temperature fluctuation range of the seeds in each watering cycle was 5°C.

### (Test Example 1-6: soybean seeds (low temperature → medium temperature → high temperature))

An extract was obtained in the same manner as in Test Example 1-5 except that in the first five cycles, the 10 ppm sodium hypochlorite solution at 24°C was sprayed every hour, in the subsequent five cycles, the 10 ppm sodium hypochlorite solution at 27°C was sprayed every hour and in the further subsequent five cycles, the 10 ppm sodium hypochlorite solution at 30°C was sprayed every hour. The temperature fluctuation range of the seeds in each watering cycle was 5°C.

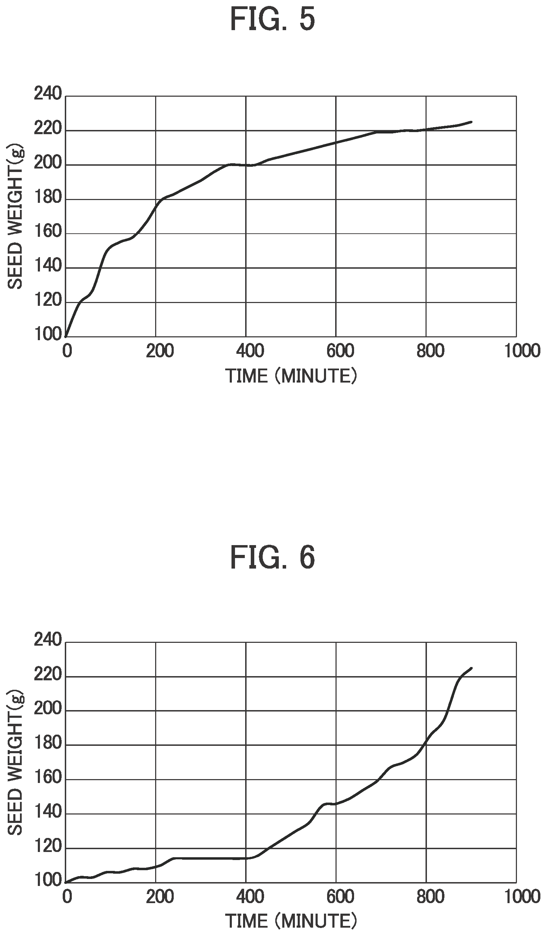

In Test Examples 1-5 and 1-6, the weight of the seeds after germination induction was measured at 30-minute intervals using a weight measurement device installed in the germination induction container. These results are shown in FIGS. 5 and 6, respectively. It has been found from FIGS. 5 and 6 that when the average water temperatures in the first, the middle and the latter stages were assumed to be T₁, T₂ and T₃, respectively, and T₁ > T₂ > T₃, there is not much difference between the final plant seed weight when T₁ > T₂ > T₃ and the final plant seed weight when T₃ > T₂ > T₁, but the plant seed weight was increased earlier during the process.

The amounts of amino acids in the extracts of the germinated plant seeds obtained in Test Examples 1-5 and 1-6 were determined in the same manner as described above. Consequently, the total amount of amino acids in Test Example 1-5 was about 45% higher than that in Test Example 1-6. This is presumably due to early increases in various types of enzyme activities in the seeds as the weight of the seeds was increased, and thus the generation of the amino acids was facilitated at an earlier point.

## Claims

1. A method for manufacturing germinated plant seeds, the method comprising: inducing germination of plant seeds while intermittently supplying water to germinate the plant seeds,
wherein in at least a part of water supply cycles, a temperature of the water is set for each of the at least a part of water supply cycles.

2. The method for manufacturing according to claim 1, wherein in the at least a part of water supply cycles, an interval between water supplies is equal to or less than two hours.

3. The method for manufacturing according to claim 1 or 2, wherein in each of the at least a part of water supply cycles, a temperature fluctuation range of the plant seeds is equal to or less than 5°C.

4. The method for manufacturing according to claim 1 or 2, wherein two or more temperatures of the water are set.

5. A germination treatment device comprising: a means for inducing germination of plant seeds while intermittently supplying water to germinate the plant seeds,
wherein in at least a part of water supply cycles, the means is capable of setting a temperature of the water for each of the at least a part of water supply cycles.

6. The germination treatment device according to claim 5, wherein in the at least a part of water supply cycles, the means is capable of setting an interval between water supplies such that the interval is equal to or less than two hours.

7. The germination treatment device according to claim 5 or 6, wherein in each of the at least a part of water supply cycles, the means is capable of setting a temperature fluctuation range of the plant seeds such that the temperature fluctuation range is equal to or less than 5°C.

8. The germination treatment device according to claim 5 or 6, wherein the means is capable of setting two or more temperatures of the water.
